Europäisches Patentamt

**European Patent Office**

Office européen des brevets

(11) Veröffentlichungsnummer: **0 176 959**
A2

(12) **EUROPÄISCHE PATENTANMELDUNG**

(21) Anmeldenummer: **85112202.8**

(22) Anmeldetag: **26.09.85**

(51) Int. Cl.⁴: **G 06 F 3/037**

(30) Priorität: **04.10.84 DE 3436390**

(43) Veröffentlichungstag der Anmeldung:
**09.04.86 Patentblatt 86/15**

(84) Benannte Vertragsstaaten:
**AT CH DE FR GB IT LI**

(71) Anmelder: **Baus, Heinz Georg**
**Wartbodenstrasse 35**
**CH-3626 Hünibach-Thun(CH)**

(72) Erfinder: **Baus, Heinz Georg**
**Wartbodenstrasse 35**
**CH-3626 Hünibach-Thun(CH)**

(74) Vertreter: **Klose, Hans, Dipl.-Phys. et al,**
**Kurfürstenstrasse 32**
**D-6700 Ludwigshafen(DE)**

(54) **Vorrichtung zur Speicherung und Ausgabe von Informationsmengen.**

(57) Die Erfindung betrifft eine Vorrichtung, insbesondere für Waren- oder Kaufhäuser, mit einem Rechner (24) und einer Speichereinheit (30). Die Vorrichtung soll als ein Informations- und Display-System derart ausgebildet sein, daß ein Benutzer die gewünschten Informationen in einfacher und zuverlässiger Weise anwählen kann, wobei zwischen Benutzer und dem System ein direkter Dialog ermöglicht werden soll. Zur Lösung wird vorgeschlagen, daß ein großflächiges Kontaktfeld (21) mit einem zugeordneten Zeichenträger (86) vorgesehen ist, wobei durch Annähern oder Berühren eines Bereiches des Zeichenträgers (86) an den Rechner (24) ein Signal gebbar ist. Es ist ferner wenigstens ein Ausgabegerät (32) vorgesehen, mit welchem in Abhängigkeit des genannten Signals aus der Speichereinheit (24) die gewünschte Informationsmenge visuelle und / order akustisch ausgebbar ist.

FIG. 2

EP 0 176 959 A2

**0176959**

Anmelder: Heinz Georg Baus, Wartbodenstr. 35
          CH-3626 Hünibach/Thun

Vorrichtung zur Speicherung und Ausgabe von Informationsmengen

Die Erfindung bezieht sich auf eine Vorrichtung zur Speicherung und Ausgabe von Inforamtionsmengen über eine Ware oder dergleichen, mit einem Rechner, mit einer Speichereinheit für die Informationsmengen, mit wenigstens einem Ausgabegerät und mit einer Abfrageeinheit.

In der europäischen Patentanmeldung 00 99 072 ist eine Vorrichtung zur Kontrolle des Ausganges oder des Einganges von Waren beschrieben. Mittels eines Lesestiftes kann eine Kennung, welche die Ware begleitet oder charakterisiert, abgetastet bzw. abgefragt werden. In einem tragbaren Terminal ist eine Tastatur vorgesehen, um eine weitere Abfragemöglichkeit zu erhalten. Durch Betätigung einer dieser Tasten können jeweils interessierende Informationsmengen abgefragt werden. Vom Terminal erfolgt eine drahtlose Signalübertragung zu einer Relaisstation und von dieser werden mittels Drahtleitungen die empfangenen Signale zu einer Zentrale weitergeleitet. Das Terminal enthält ein alpha-nummerisches Anzeigefeld, um Warenart, Preis und Restbestand anzugeben. Diese bekannte Vorrichtung erfordert hinreichende Kenntnisse zur Bedienung und ist ausschließlich für das Personal eines Warenhauses oder dergleichen geeignet. Ein fremder Benutzer, wie z. B. ein Kunde in einem Warenhaus, kann diese Vorrichtung nicht bedienen. Ferner können mit der Vorrichtung auch nur kleine Informati-

**Patentanwalt Dipl.-Phys. HANS KLOSE**
Zugelassener Vertreter vor dem Europäischen Patentamt    _ 2 _

6700 Ludwigshafen
Kurfürstenstraße 32

0176959

onsmengen an den Benutzer übermittelt werden.

In der deutschen Offenlegungsschrift 30 30 923 ist eine Einrichtung beschrieben, die zur Erstellung eines Steuerlochstreifens für Werkzeugmaschinen dient. Diese Einrichtung enthält einen Digitalisiertisch, auf welchen eine Zeichnung auflegbar ist, die mittels einer Lupe und eines Abtaststiftes abgetastet werden kann. Die derart digitalisierten geometrischen Daten können auf einem grafischen Ausgabegerät dargestellt werden. Ferner können in interaktiver Arbeitsweise Korrekturen, Ergänzungen usw. vorgenommen werden. Zur Informationsübermittlung an einen Kunden eines Warenhauses ist eine derartige Einrichtung nicht geeignet.

Ferner ist in der britischen Patentanmeldung 20 80 990 eine Vorrichtung mit einem Bildschirm und zugeordnetem Berührungsschirm bekannt, um einem Benutzer einen direkten Datendialog mit einem Rechner einschließlich einer Speichereinheit zu ermöglichen. Vor dem Bildschirm des Monitors ist der Berührungsschirm angeordnet, der eine Anzahl von transparenten, kapazitiv wirksamen Berührungspfaden oder Sensoren aufweist. Ein Benutzer kann mittels der Sensoren aus einem mit dem Monitor dargebotenen Menu eine Auswahl vornehmen, wobei über einen nachgeschalteten Mikroprozessor aus dem Speicher ein weiteres Menu oder dergleichen abgefragt und auf dem Bildschirm dargestellt wird. Bei einem derartigen Berührungsschirm ergeben sich Schwierigkeiten hinsichtlich Auflösung und Genauigkeit infolge der relativ kleinen Abmessungen, welche durch die Bildröhre bzw. den Bildschirm vorgegeben sind. Ferner kann ein Benutzer bei Berührung mit seinem Finger sehr leicht neben die gewünschte Position deuten und somit eine Fehlbedienung auslösen.

In Waren-, Kaufhäusern usw. besteht ein erhebliches Bedürfnis, dem Kunden Informationen über die angebotenen Produkte, über seinen Standort, über Produktanwendungen usw. zukommen zu lassen. Die auf Warenverpackungen angebrachten Informationen sind in der Praxis oft nicht ausreichend, zumal im Hinblick auf Umweltbelastungen Verpackungen immer kleiner gestaltet oder auch

0176959

vollständig weggelassen werden. Die direkte Informationsübermittlung und Verkaufsberatung durch Verkaufsberater erfordert
einen hohen Personal- und Kostenaufwand. Ferner besteht auf
Ausstellungen, in Museen, auf Flughäfen usw. ebenfalls ein
erhebliches Informationsbedürfnis über die ausgestellten Gegenstände oder über den jeweiligen Standort bzw. über Flugverbindungen oder sonstiges.

Der Erfindung liegt daher die Aufgabe zugrunde, die Vorrichtung als ein Informations- und Display-System über Produkte
usw. auszubilden, mit welchem die gewünschten Informationen
vom Benutzer in einfacher und zuverlässiger Weise angewählt
werden können. Das System soll in klarer und übersichtlicher
Weise einem Kunden zumindest einen ersten Überblick über die
angebotenen Produkte oder die ausgestellten Gegenstände oder
einen Lageplan usw. ermöglichen. Das System soll in einfacher
Weise bedient werden können, wobei ein direkter Dialog des
Benutzers mit dem System ermöglicht werden soll.

Zur Lösung wird vorgeschlagen, daß ein großflächiges Kontaktfeld mit einem zugeordneten Zeichenträger vorgesehen ist, daß
durch Annähern oder Berühren eines Zeichenträgerbereiches über
das Kontaktfeld an einen Rechner ein Signal gegeben wird und
daß wenigstens ein Ausgabegerät vorgesehen ist, mit welchem in
Abhängigkeit des genannten Signals aus der Speichereinheit die
gewünschte Informationsmenge visuell und / oder akustisch ausgebbar ist. Zweckmäßig wird das Kontaktfeld stationär nach Art
einer Schautafel angeordnet und mit einer Einheit versehen,
mittels welcher die Zuordnung der auszugebenden Informationsmenge zu dem jeweiligen Ausgabegerät durchführbar ist.

Das vorgeschlagene System zeichnet sich durch einen funktionsgerechten und den jeweiligen Einsatzbedingungen in einfacher
Weise anpaßbaren Aufbau aus. Der erfindungsgemäß vorgeschlagene Zeichenträger ist insbesondere nach Art eines Plakates
ausgebildet und enthält Diagramme, Fotos, Zeichnungen, Symbole
oder ähnliches. Ferner kann der Zeichenträger als Leinwand für
die Projektion eines Filmes oder eines Dias ausgebildet sein.
Es können im Rahmen der Erfindung auch solche Systeme vorgesehen sein, bei welchen ein großflächiges Bild mit elektronischen Mitteln erzeugt wird, wobei dieses Bild entsprechend der Größe des Kontaktfeldes dargestellt wird. Der Zeichenträger oder das auf dem Zeichenträger sichtbar gemachte Bild ist erfindungsgemäß variabel, wodurch breite Einsatzmöglichkeiten für das System geschaffen sind. Das großflächige Kontaktfeld erleichtert in hervorragender Weise die Bedienbarkeit, da ein Benutzer lediglich durch Berühren oder Annähern an den interessierenden Bereich das an den Rechner zu liefernde Signal auslöst. Das erfindungsgemäße Kontaktfeld kann im Eingangsbereich eines Warenhauses oder dergleichen aufgestellt sein und nach Art einer Schautafel einen Lageplan oder eine Auflistung von Produktgruppen oder Abbildungen oder ähnliches darbieten.

Je nach Einsatzzweck kann das Kontaktfeld Außenabmessungen bis zu einigen Metern aufweisen, wobei erfindungsgemäß als untere Grenze der Bereich von einem Meter eingehalten wird. Das Umsetzen von Zahlen, wie es bei Tastaturen erforderlich ist, und hiermit verbundene Fehlbedienungen entfallen. Der Benutzer tippt unmittelbar sein gewünschtes Ziel an und erhält auf dem erfindungsgemäß separaten Ausgabegerät die gewünschte Information dargeboten. Im Unterschied zu den eingangs erwähnten Berührungsscheiben erfolgt die Ausgabe über wenigstens ein, und zwar zweckmäßig zwei oder mehr, Ausgabegeräte. Benutzer bzw. Kunden können also kurz nacheinander das erfindungsgemäß optische Eingabegerät mit Kontaktschirm und Zeichenträger bedienen, und die jeweilige Informationsmenge wird auf einem der Ausgabegeräte dem jeweiligen Kunden dargeboten, eine gegenseitige Beeinträchtigung wird praktisch vermieden. Jeder Kunde kann dann, solange er will, die dargebotene Information nutzen. Als Datenverarbeitungseinheit kann ein hinlänglich bekannter Rechner mit einem Floppydisc-Laufwerk oder dergleichen vorgesehen werden, wobei über ein entsprechendes Softwareprogramm die Steuerung und Zuordnung der Signale und gespeicherten Informationsmengen vorgenommen wird. Zweckmäßig kann erfindungsgemäß ein Microprocessor zum Einsatz gelangen, der ggfs. entsprechend den Einsatzbedingungen programmiert werden kann. Sind mehrere Ausgabegeräte vorgesehen, so erfolgt im Rahmen der Erfindung zweckmäßig über eine Einheit eine

**Patentanwalt Dipl.-Phys. HANS KLOSE**
Zugelassener Vertreter vor dem Europäischen Patentamt     _ 5 _

6700 Ludwigshafen
Kurfürstenstraße 32
**0176959**

Zuordnung, beispielsweise durch Aufleuchten einer Nummer oder einer farbigen Lampe beim Antippen des Bildträgers, wobei ein entsprechendes Signal dann auch auf oder an dem Ausgabegerät vorhanden ist, auf welchem die ausgewählte Information dargeboten wird.

In einer besonderen Ausgestaltung weist der Rechner eine insbesondere frei programmierbare Codiereinheit auf, mittels welcher einerseits Adressignale für die Informationsmengen der Speichereinheit und andererseits die Koordinaten der einzelnen Bereiche des Kontaktfeldes gespeichert sind. Mittels der erfindungsgemäßen Codiereinheit läßt sich die Zuordnung der vom Benutzer auszuwählenden Bereiche zu den Informationsmengen in überraschend einfacher Weise vorgeben und / oder bei Bedarf ändern. Die derart ausgestaltete Vorrichtung ist daher sehr flexibel, wobei Änderungen des Zeichenträgers bzw. der Informationsmengen ohne weiteres möglich sind. Die Codiereinheit ist zweckmäßig als ein frei programmierbarer Speicher ausgebildet. Ein derartiger frei programmierbarer Speicher oder Umsetzer ermöglicht eine unmittelbare und ferner schnelle Zuordnung. In der Speichereinheit sind erfindungsgemäß produktspezifische Informationsmengen, Angaben über Ort, Lage oder dergleichen gespeichert. Die Speichereinheit ist im Rahmen der Erfindung als ein Bildplattenspeicher, Videorekorder, Diaprojektor, Magnetplatte oder dergleichen für Bildinformationen ausgebildet. Jeder Informationsmenge, also dem einzelnen Bild oder den einzelnen Bildern einer Bildsequenz, ist ein definiertes Adressignal zugeordnet, das über das Kontaktfeld beim Berühren abgefragt und abgerufen wird. Ein schneller Zugriff zu der gewünschten Informationsmenge ist gewährleistet.

In einer anderen Ausgestaltung zeigt der Zeichenträger eine Übersicht über Produkte oder dergleichen, wobei nach Betätigung des Kontaktfeldes auf dem Ausgabegerät die örtliche Lage des ausgewählten Produktes oder dergleichen in dem Gebäude, insbesondere Warenhaus, angezeigt wird. So kann auf dem Ausgabegerät insbesondere eine Übersicht oder ein Lageplan des Warenhauses angezeigt sein, in welcher Darstellung bzw. über-

**0176959**

sicht der Standort des Kunden durch einen Leuchtpunkt markiert wird und die Lage der ausgewählten Produktgruppe ebenso wie der dorthin führende Weg durch Aufleuchten oder Blinken angezeigt wird.

In einer besonders wesentlichen Ausgestaltung ist die Speichereinheit derart ausgebildet, daß die Informationsmengen Bildern entsprechen. Die Speichereinheit ist insbesondere als ein Bildplattenspieler ausgebildet, doch kann sie im Rahmen der Erfindung auch als Videorekorder, Filmgerät oder ähnliches ausgebildet sein. Auf eine Videoplatte lassen sich bei einer sehr hohen Informationsdichte die Informationsmengen speichern und mit einer äußerst kurzen Zugriffszeit in Form von stehenden Bildern oder auch in Form von Werbespots oder ähnlichem abrufen. Den Informationsmengen sind entsprechende Adressen zugeordnet, die mit einem äußerst geringen Rechneraufwand unmittelbar bei Betätigung des Kontaktfeldes abgerufen werden können; eine aufwendige Software oder entsprechende Umsetzereinrichtungen entfallen. Der Bildplattenspieler sowie die Ausgabegeräte in Form von Monitoren mit Bildschirmen können als handelsübliche Geräte eingesetzt werden und eine besondere Anpassung und Umbau entfällt.

In einer weiteren Ausgestaltung weist das Kontaktfeld eine Anzahl von mechanischen, insbesondere kapazitiven Kontakten oder Sensoren auf, die bevorzugt nach Art einer Matrix oder eines Koordinatenfeldes neben bzw. übereinander angeordnet sind. Die Fertigung eines derartigen Kontaktfeldes ist mit einem vergleichsweise geringen Aufwand durchführbar, und es gelangen handelsübliche Kontakte oder Sensoren zum Einsatz. Hinsichtlich der maximalen Größe sind insoweit keine Einschränkungen zu beachten, so daß auch sehr große Kontaktfelder mit Außenabmessungen von einigen Metern kostengünstig gefertigt werden können. Ist ein Kontakt oder Sensor defekt, so muß dieser einfach ausgetauscht werden; tritt bei dem oben erwähnten Berührungsschirm ein Defekt auf, so muß der Berührungsschirm insgesamt ausgewechselt werden. Die erfindungsgemäß vorgeschlagenen Kontakte oder Sensoren weisen Kontakt- bzw. Berührungsflächen in der Größenordnung von wenigstens einem Quad-

0176959

ratzentimeter auf, wodurch die Gefahr von Eingabefehlern verringert wird.

In einer besonders wesentlichen Ausgestaltung ist das Ausgabegerät mobil, insbesondere auf einem Einkaufswagen, angeordnet,
wobei zwischen dem Ausgabegerät und der Speichereinheit und /
oder dem Rechner ein bevorzugt drahtloses Übertragungssystem
angeordnet ist. Mit dem Kontaktfeld wählt ein Benutzer zunächst die gewünschte Informationsmenge aus und auf dem bevorzugt auf dem Einkaufswagen mobil angeordneten Ausgabegerät
wird ihm diese Information dargeboten. Hierbei kann die Speichereinheit zentral angeordnet sein, wobei mit einem drahtlosen Übertragungssystem die Informationsmenge auf den Einkaufswagen bzw. das Ausgabegerät übertragen wird. Hierzu sind entsprechende Sender und Empfänger stationär bzw. mobil angeordnet. Ferner kann im Rahmen der Erfindung auch dem mobilen
Ausgabegerät ein ebenfalls mobiler Speicher zugeordnet sein.
So kann im Rahmen der Erfindung zunächst eine übergeordnete
Information mit dem Kontaktfeld, beispielsweise zum Auffinden
einer bestimmten Produktgruppe im Warenhaus, angewählt und von
dem zentralen Speicher abgerufen und mit dem Übertragungssystem an das mobile Ausgabegerät weitergegeben werden. Wichtig
ist in diesem Zusammenhang auch die Zuordnung über eine Einheit durch optische und / oder akustische Zusatzinformationen,
damit der Benutzer auch das "richtige" Ausgabegerät nimmt.
Weitere Informationen kann dann der Benutzer unmittelbar im
direkten Datendialog aus dem untergeordneten, dezentralen
Speicher abfragen, der mobil auf dem Einkaufswagen angeordnet
ist.

Die Erfindung wird nachfolgend an Hand der in der Zeichnung
dargestellten Ausführungsbeispielen näher erläutert. Es zeigen:

Fig. 1    eine schematische Darstellung mit einem großflächigen
          Kontaktfeld und mehreren visuellen Ausgabegeräten,

**Patentanwalt Dipl.-Phys. HANS KLOSE**
Zugelassener Vertreter vor dem Europäischen Patentamt    – 8 –

6700 Ludwigshafen
Kurfürstenstraße 32

**0176959**

Fig. 2  eine Ausführungsform mit einem mobil angeordneten Ausgabegerät und einem drahtlosen Übertragungssystem,

Fig.3,4  Ausführungsformen, bei welchen dem mobilen Ausgabegerät ein Lichtgriffel oder dergleichen zugeordnet ist,

Fig. 5  schematisch die Anordnung des Kontaktfeldes in einer Präsentationswand für Produkte.

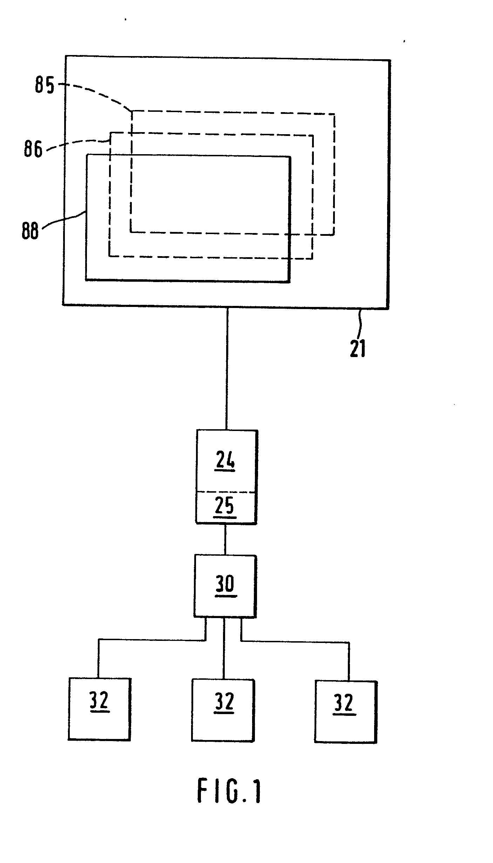

Fig. 1 zeigt das vorgeschlagene System mit einem großflächigen Kontaktfeld 21, welches bevorzugt im Eingangsbereich eines Warenhauses oder dergleichen für die Benutzer leicht zugänglich aufgestellt ist. Im Prinzip besteht das Kontaktfeld 21 aus einer Anzahl von hier schematisch nur angedeuteten Kontakten 85. Vor den Kontakten befindet sich der Zeichenträger 86, auf welchem beispielsweise der Lageplan des Warenhauses oder auch eine erste grobe Auswahl von Produkten oder dergleichen dargestellt ist. Der Zeichenträger kann einfach ausgewechselt werden, und das Kontaktfeld kann somit in einfachster Weise den jeweiligen Erfordernissen angepaßt werden. Der Zeichenträger ist im Grunde genommen als ein Plakat ausgebildet, auf dem die erforderlichen Objekte, Schriftzüge, Diagramme, Zeichnungen, Symbole, Listen und dergleichen dargestellt werden. Im Rahmen der Erfindung kann jedoch auf den Zeichenträger auch mit einem Diaprojektor, Filmprojektor oder sonstigem das jeweils gewünschte Bild projeziert werden. Im Rahmen der Erfindung können auch teilweise durchlässige Projektionswände zum Einsatz gelangen, die von der Rückseite her beleuchtet werden und an deren Vorderseite für einen Betrachter dann das Bild sichtbar ist; bei einer solchen Ausführungsform sind selbstverständlich die Kontakte vor dem Zeichenträger anzuordnen.

Vor dem Zeichenträger 86 ist eine Scheibe oder flexible Folie 88 zum Schutz des Zeichenträgers 86 angeordnet. Ein Benutzer braucht lediglich mit seinem Finger oder auch mit einem Tastgriff oder ähnlichem von vorn den interessierenden Bereich des Zeichenträgers 86 zu berühren oder anzutippen, um über das Kontaktfeld an den Rechner 24 das zugeordnete Eingabesignal zu geben. Der Rechner 24 weist eine Codiereinheit 25 auf, mittels welcher die Koordinaten der einzelnen Bereiche des Zeichenträgers Adressignale der Informationsmengen zugeordnet werden. Die Codiereinheit 25 ist zweckmäßig als ein frei programmierbarer Speicher ausgebildet, so daß Änderungen, sei es bei den gespeicherten Informationsmengen oder auch des Bildträgers, ohne weiteres durchgeführt werden können. In einfachster Weise ist damit die gewünschte Informationsauswahl getroffen, und aus der Speichereinheit 30 wird die gewünschte Informationsmenge abgefragt. Besonders zweckmäßig ist die Ausgestaltung der Speichereinheit mit einem Bildplattengerät, zumal bei einer hohen Speicherdichte die Informationsmengen direkt und sehr schnell in Form eines Standbildes oder auch eines Werbespots abgefragt werden können. Ferner können erfindungsgemäß auch Plattenlaufwerke, insbesondere für geschriebene Texte, sowie Kassettenrekorder oder ähnliches für akustische Aufzeichnungen vorgesehen sein. Die Speichereinheit stellt somit ein den jeweiligen Bedürfnissen angepaßtes Datenbanksystem dar, in welchem die erforderlichen Informationsmengen einschließlich zugeordneter Adressen bzw. Adressignalen abgespeichert sind, die bei Betätigung des Kontaktfeldes über den Rechner abrufbar sind.

Es sind mehrere Ausgabegeräte 32 vorhanden, um die abgefragte Informationsmenge visuell und / oder akustisch ausgeben zu können. Mehrere Ausgabegeräte haben den Vorteil, daß mehrere Benutzer auch in kurzen Zeitabständen nacheinander mit dem großflächigen Kontaktfeld 21 die Informationen abfragen, die dann jeweils auf einem der Ausgabegeräte 32 dargeboten werden; eine gegenseitige Störung und Beeinträchtigung ist damit weitgehend unterbunden. Die Ausgabegeräte 32 können je nach Bedarf als Bildschirme, Lautsprecher, Druckeinrichtungen und ähnliches ausgebildet sein.

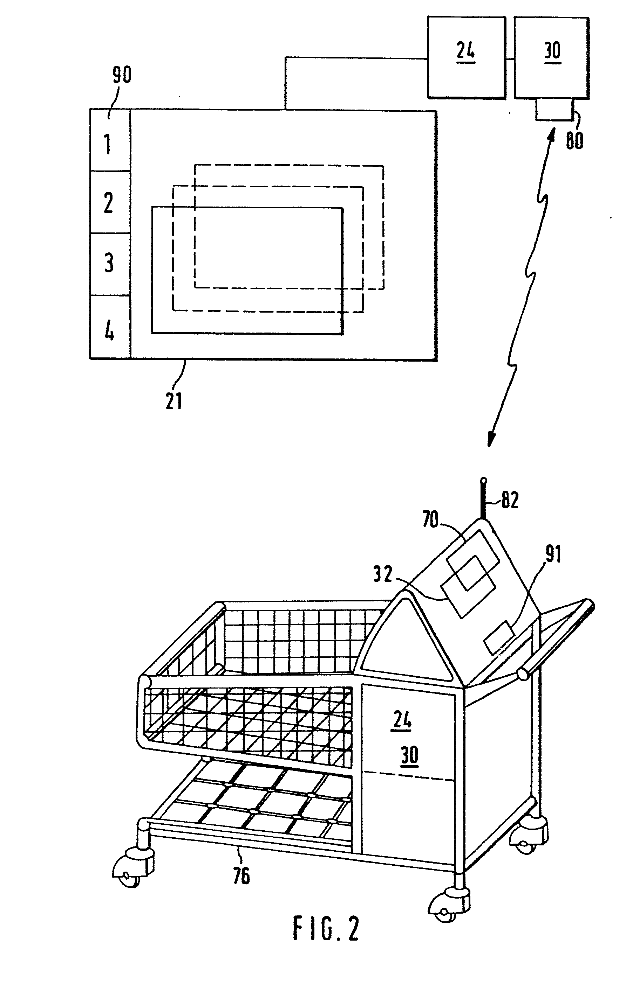

Fig. 2 zeigt eine Ausführungsform mit einem auf einem Einkaufswagen 76 mobil angeordneten Ausgabegerät 32. Das gesamte System weist eine Vielzahl derartiger mobiler Ausgabegeräte auf. Am Kontaktfeld 21 befindet sich eine Einheit in Form einer optischen Anzeige 90, in der hier beispielshaft die

**Patentanwalt Dipl.-Phys. HANS KLOSE**
Zugelassener Vertreter vor dem Europäischen Patentamt — 10 —

6700 Ludwigshafen
Kurfürstenstraße 32

**0176959**

Ziffern 1 bis 4 angegeben sind. Wird das Kontaktfeld berührt, so leuchtet auf der Anzeige 90 beispielsweise die Ziffer 2 auf und auf dem Einkaufswagen 76 erscheint ebenfalls diese Ziffer auf einer weiteren Anzeigeeinheit 91. Damit ist eine eindeutige Zuordnung der angewählten Informationsmenge und dem jeweiligen Ausgabegerät gegeben. Ggfs. könnten auch die einzelnen Einkaufswagen durchnummeriert sein, und der Benutzer müßte vor dem Antippen des Kontaktfeldes 21 die Nummer seines Wagens am Kontaktfeld eingeben, wobei dann anstelle der Anzeige 90 entsprechende Tasten oder ähnliches vorzusehen wären. Die Datenübermittlung zwischen Rechner 24, Speichereinheit 30 und Ausgabegerät 32 erfolgt mit einem drahtlosen Übertragungssystem, welches zwei Einheiten 80, 82 zum Empfang und Senden aufweist. Die Datenübermittlung erfolgt in beiden Richtungen. Grundsätzlich kann eine einzige zentrale Speichereinheit 30 vorgesehen werden, über welche die abgerufenen Informationsmengen an den jeweiligen Einkaufswagen bzw. an das jeweilige Ausgabegerät 32 mittels entsprechender drahtloser Übertragungssysteme weitergegeben werden.

Zusätzlich oder auch alternativ können aber auch im Rahmen der Erfindung auf dem Einkaufswagen dezentrale Speichereinheiten 30 mit zugeordneten Rechnern 24 vorgesehen werden. Zweckmäßig hat sich eine Aufteilung der Informationsmengen dahingehend erwiesen, daß übergeordnete Informationen, beispielsweise über die Lage von Produkten im Warenhaus, in einem zentralen Speicher 30 abgespeichert werden. Weitere in der Hierarchie der Daten untergeordnete Informationen befinden sich dann auf dem jeweiligen Einkaufswagen bzw. unmittelbar am mobilen Ausgabegerät 32. Dem mobilen Ausgabegerät 32 ist eine entsprechende Eingabeeinheit 70 zugeordnet, die hier als eine hinlänglich bekannte Berührungsscheibe 70 vor dem Bildschirm des Ausgabegerätes 32 angeordnet ist.

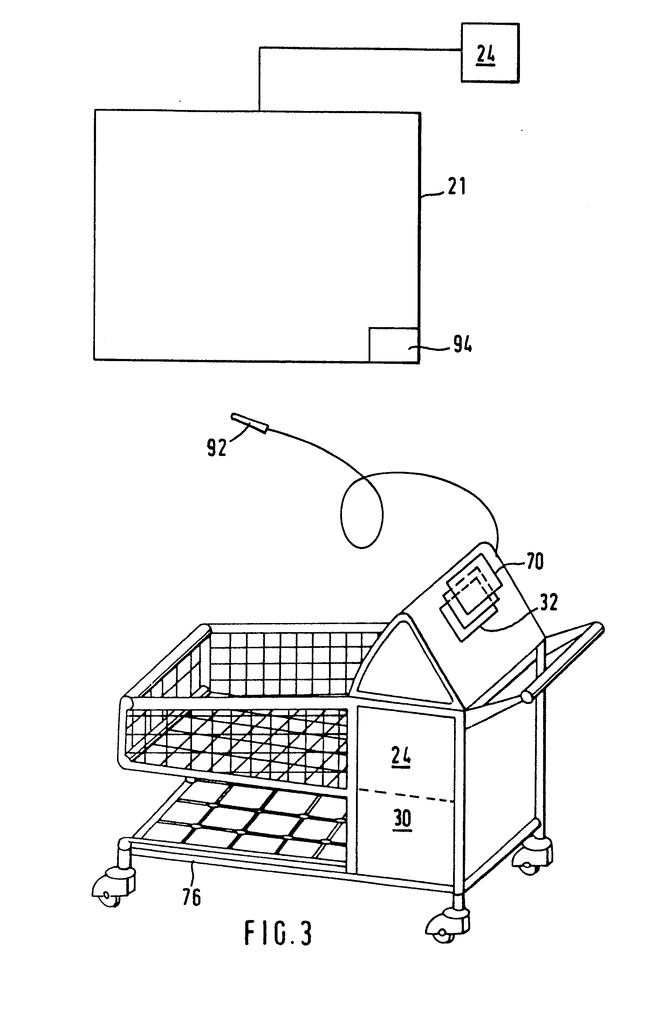

Fig. 3 zeigt eine Ausführungsform, bei welcher dem auf einem Einkaufswagen 76 mobil angeordneten Ausgabegerät 32 eine Abfrageeinheit 92, die bevorzugt als ein Lichtgriffel ausgebildet ist, zugeordnet ist. Mit dem Lichtgriffel wird das Kontaktfeld 21 in der oben erläuterten Weise berührt, und anstel-

**0176959**

le der oben erwähnten Anzeigen erfolgt hier eine unmittelbare
Zuordnung zwischen Kontaktfeld 21 und Ausgabegerät 32. Der
Benutzer wählt in der oben erläuterten Weise zunächst über das
Kontaktfeld 21 die gewünschte Information an und über die hier
als Bereich 94 ausgebildete Einheit zum Zuordnen wird ein
entsprechendes Signal bereit gestellt. In dem Bereich 94 erscheint beispielsweise dann eine Strichkodierung, die mit der
Abfrageeinheit abgefragt wird. Die mobile Speichereinheit 30
liefert dann an das Ausgabegerät 32 die entsprechende Informationsmenge. Nachfolgend kann dann der Datendialog vom Benutzer
auch unmittelbar zwischen dem Ausgabegerät bzw. dem vorgeordneten Berührungsschirm 70 bzw. die zugeordnete Eingabeeinheit
durchgeführt werden. Im Rahmen der Erfindung kann aber auch
auf dem genannten Wege die vollständige Informationsmenge
abgefragt werden. Dem stationären Kontaktfeld 21 ist dann
zusätzlich auch eine zentrale Speichereinheit erfindungsgemäß
zugeordnet. Die Datenübermittlung kann dann auch auf induktivem Wege mittels der in den Bereich 94 eingefügten Abfrageeinheit 92 erfolgen.

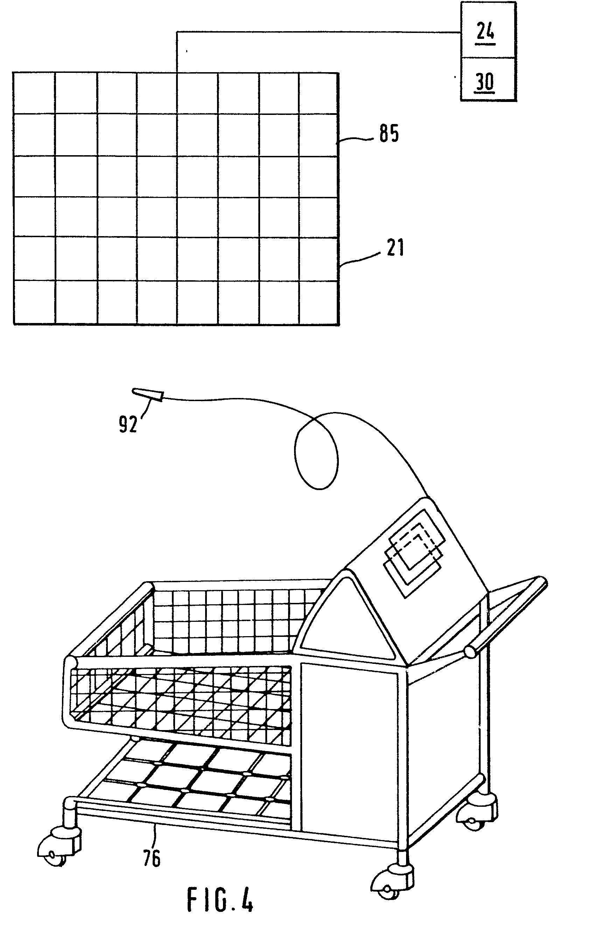

An Hand von Fig. 4 soll das erfindungsgemäße Kontaktfeld 21
weiter erläutert werden. Das Kontaktfeld 21 enthält eine Anzahl von Sensoren oder Kontakten 85, die nach Art einer Matrix
bzw. in Koordinatenform dicht neben- und übereinander angeordnet sind. Die Anzahl und auch die Größe der einzelnen Kontakte
richtet sich nach den jeweiligen Einsatzbedingungen. Wichtig
ist, daß der gesamte Bereich des Kontaktfeldes mit Kontakten
belegt ist, wodurch eine hohe Flexibilität des Systems gegeben
ist. Die Kontakte 35 sind unmittelbar auf den Rechner 24 geführt, mit welchem die Umwandlung in entsprechende Adressignale für die Speichereinheit erzeugt werden. Da die gesamte
Fläche des Kontaktfeldes 21 mit Kontakten 85 belegt ist, wird
eine hohe Flexibilität erreicht, so daß beliebige Bildträger
zugeordnet werden können.

In einer erfindungswesentlichen Ausgestaltung ist das Kontaktfeld in eine Wand integriert, mit welcher auch die Produkte
selbst dargeboten werden. Diese Wand kann als hinlänglich bekanntes Regal oder allgemein als eine Produkt-Präsentations-

**Patentanwalt Dipl.-Phys. HANS KLOSE**
Zugelassener Vertreter vor dem Europäischen Patentamt  _ 12 _

6700 Ludwigshafen
Kunürstenstraße 32

**0176959**

wand mit geeigneten Warenträgern ausgebildet sein. Durch Berühren der Sensoren oder Kontakte kann dann eine unmittelbare Abfrage in der oben erläuterten Weise durchgeführt werden. Wichtig ist in diesem Zusammenhang auch, daß das komplette System auch mehrere derartige integrierte Produktionswände mit Kontaktfeldern umfassen kann, wobei ein zentraler Rechner mit Speichereinheit vorhanden ist.

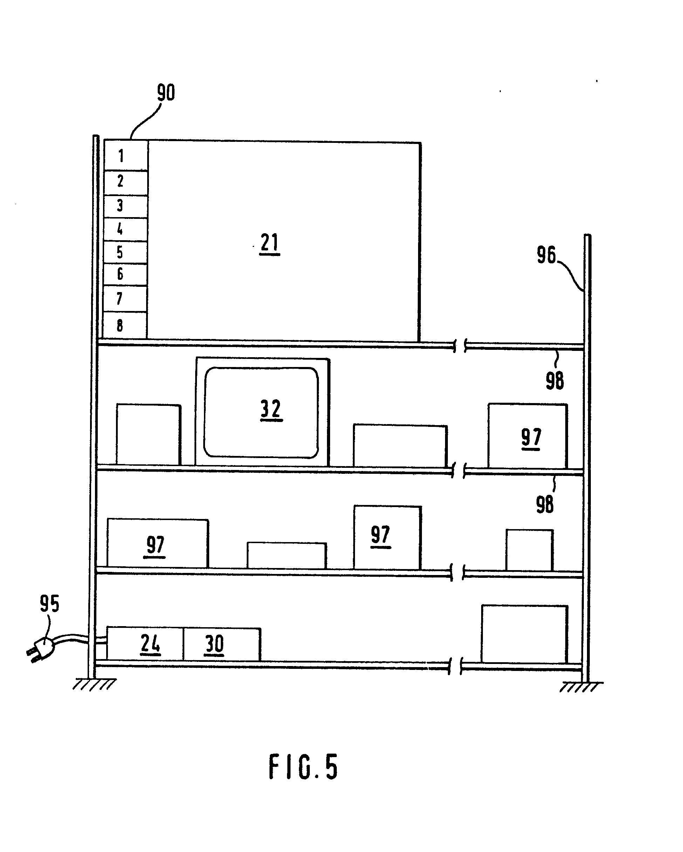

In Fig. 5 ist schematisch eine Präsentationswand 96 dargestellt, in welcher erfindungsgemäß das Kontaktfeld 21 integriert ist. Die Präsentationswand 96 enthält ferner auch den Rechner 24 sowie die Speichereinheit 30. Der Rechner 24 und die Speichereinheit 30 werden zweckmäßig im hinteren Teil der Wand 96 angeordnet, um vorne Platz für die Produkte 97 frei zu haltenn. Wie oben bereits dargelegt, können zusätzlich oder auch alternativ der Rechner 24 und die Speichereinheit 30 mobil auf einem Einkaufswagen angeordnet sein. Die erfindungsgemäß ausgebildete Präsentationswand ist leicht zu transportieren und kann bei Bedarf an der jeweils gewünschten Stelle in einem Kaufhaus, Museum usw. aufgestellt werden, ohne daß eine aufwendige Verkabelung oder sonstiges benötigt werden. Die Präsentationswand ist lediglich über einen Stecker an das elektrische Versorgungsnetz anzuschließen. Im Rahmen der Erfindung kann gegebenenfalls auch eine Batterieversorgung vorgesehen sein. Die vorgeschlagene Vorrichtung stellt ein autonomes System dar, welches problemlos entsprechend den jeweiligen Anforderungen aufgestellt und von einem Kunden ohne Spezialkenntnisse lediglich durch Betätigen des großflächigen Kontaktfeldes benutzt werden kann. Die erfindungsgemäße Vorrichtung ist in hervorragender Weise geeignet, einen Kunden zu einem aktiven Informationsaustausch anzuregen. Ein Benutzer oder Kunde muß keine Hemmschwellen überwinden, wobei dennoch große Informationsmengen in einfacher Weise zugänglich und dargeboten werden. Die Präsentationswand 96 kann im einfachsten Falle nach Art eines Regales aufgebaut sein, in welchem die hier nur schematisch angedeuteten Produkte 97 auf entsprechenden Halterungen 98 angeordnet sind. Das erfindungsgemäße Präsentationssystem kann eine Breite von mehreren Metern aufweisen.

Bezugszeichenliste


| 21 | Kontaktfeld |
|---|---|
| 24 | Rechner |
| 25 | Codiereinheit |
| 30 | Speichereinheit |
| 32 | Ausgabegerät |
| 70 | Eingabeeinheit |
| 76 | Einkaufswagen |
| 80, 82 | Übertragungssystem |
| 85 | Kontakte |
| 86 | Zeichenträger |
| 90, 91 | Anzeige |
| 92 | Abfrageeinheit |
| 94 | Bereich |
| 95 | Stecker |
| 96 | Präsentationswand |
| 97 | Produkte |
| 98 | Halterungen |

Patentanwalt Dipl.-Phys. HANS KLOSE
Zugelassener Vertreter vor dem Europäischen Patentamt    _ 14 _

6700 Ludwigshafen
Kurfürstenstraße 32

0176959

Patentansprüche

1. Vorrichtung zur Speicherung und Ausgabe von Informationsmengen über eine Ware oder dergleichen, mit einem Rechner, mit
einer Speichereinheit für die Informationsmengen, mit wenigstens einem Ausgabegerät und mit einer Abfrageeinheit,
dadurch gekennzeichnet, daß ein großflächiges Kontaktfeld (21)
mit einem zugeordneten Zeichenträger (86) vorgesehen ist,
wobei durch Annähern oder Berühren eines Bereiches des Zeichenträgers (86) an den Rechner (24) ein Signal gebbar ist,
und daß wenigstens ein Ausgabegerät (32) vorgesehen ist, mit
welchem in Abhängigkeit des genannten Signals aus der Speichereinheit (30) die gewünschte Informationsmenge visuell und/
oder akustisch ausgebbar ist.

2. Vorrichtung nach Anspruch 1, dadurch gekennzeichnet, daß
das Kontaktfeld (21) nach Art einer Schautafel ausgebildet und
insbesondere stationär angeordnet ist, und als gemeinsame
Abfrageeinheit für wenigstens zwei Ausgabegeräte (32) dient
und / oder daß das Kontaktfeld (21) und / oder das Ausgabegerät (32) eine Einheit (90, 92, 94) aufweist, mittels welcher
die Zuordnung der auszugebenden Informationsmenge zu einem der
Ausgabegeräte (32) durchführbar ist.

3. Vorrichtung nach Anspruch 1 oder 2, dadurch gekennzeichnet,
daß der Rechner (24) eine insbesondere frei programmierbare
Codiereinheit (25) aufweist und daß mittels der Codiereinheit
(25) einerseits Adressignale für die Informationsmengen der
Speichereinheit (30) und andererseits jeweils die Koordinaten
der einzelnen Bereiche des Kontaktfeldes (21) gespeichert
sind.

4. Vorrichtung nach einem der Ansprüche 1 bis 3, dadurch gekennzeichnet, daß der Zeichenträger (86) eine Übersicht über
Produkt oder dergleichen aufweist, wobei nach Betätigung des
Kontaktfeldes (21) auf dem Ausgabegerät (32) die örtliche

Patentanwalt Dipl.-Phys. HANS KLOSE    6700 Ludwigshafen
Zugelassener Vertreter vor dem Europäischen Patentamt    — 15 —    Kurfürstenstraße 32

0176959

Position des angewählten Produktes oder dergleichen in einem Gebäude, insbesondere im einem Warenhaus, darstellbar ist.

5. Vorrichtung nach einem der Ansprüche 1 bis 4, dadurch gekennzeichnet, daß das Kontaktfeld (21) eine Anzahl von mechanischen oder insbesondere kapazitiven, Kontakten (85) oder Sensoren aufweist, die insbesondere nach Art einer Matrix in Spalten und Zeilen neben- und übereinander angeordnet sind.

6. Vorrichtung nach einem der Ansprüche 1 bis 5, dadurch gekennzeichnet, daß das Ausgabegerät (32) mobil, insbesondere auf einem Einkaufswagen (76), angeordnet ist und daß zwischen dem Kontaktfeld (21) bzw. dem Rechner (24) oder der Speichereinheit (30) ein bevorzugt drahtloses Übertragungssystem (80, 82) vorgesehen ist.

7. Vorrichtung nach einem der Ansprüche 1 bis 6, dadurch gekennzeichnet, daß dem mobil angeordneten Ausgabegerät (32) eine Abfrageeinheit (92) zugeordnet ist, mittels welcher Signale für die Zuordnung des jeweiligen Abfragegerätes und / oder die gesamte Informationsmenge abfragbar ist.

8. Vorrichtung nach einem der Ansprüche 1 bis 7, dadurch gekennzeichnet, daß das Kontaktfeld (21) in eine Produkt-Präsentationswand (96) integriert ist.

9. Vorrichtung nach einem der Ansprüche 1 bis 8, dadurch gekennzeichnet, daß die Speichereinheit (30), die insbesondere als ein Bildplattengerät ausgebildet ist, Informationsmengen entsprechend Bildern, und zwar Einzelbildern oder Bildsequenzen, speichert.

85

86

88

21

24

25

30

32        32        32

FIG.1

FIG. 2

FIG.3

24

30

85

21

92

76

FIG.4

0176959

FIG.5